# EUROPEAN PATENT APPLICATION

(11) **EP 1 803 681 A2**
(43) Date of publication of application: **04.07.2007**
(21) Application number: 06113668.5
(22) Date of filing: 09.05.2006
(51) Int. Cl.: B67B 3/064, B65G 51/03

(54) **Device for feeding caps**

(30) Priority: 29.12.2005 IT TO20050914
(71) Applicant: Arol S.p.A., 14053 Canelli (Asti) (IT)
(72) Inventor: CIRIO, Sergio, I-14053, Canelli (Asti) (IT)
(74) Representative: Marchitelli, Mauro

(57) **Abstract**

Device for feeding caps to a capping machine, comprising a cap transport route (18) along which the caps (30) advance in a continuous fashion between an entrance section (22) and an exit section (24), in which the transport route (18) contains a mobile buffer stock of caps advancing jointly as the caps leave said exit section (24). The transport route (18) is provided with a plurality of holes (38) to supply jets of air such as to cause the caps (30) to advance jointly along the transport route (18).

## Description

The present invention concerns a device for feeding caps to a capping machine.

The present invention was developed in particular in view of its application to combined plants for blowing plastic bottles and filling-capping them. In plants of this type, the capping machines are fed in a continuous fashion with plastic caps that are applied to the upper extremities of the bottles.

However, the invention is not limited to this specific field of use and may be utilised in general in the sector of closing containers with automatic capping machines.

In automatic capping machines, a halt in the system supplying caps may cause the capping machine to halt, with severe consequences along the entire production line. To avoid similar drawbacks, it is known that a mobile buffer stock of caps upstream from the capping machine is provided for, so as to guarantee that the capping machine can continue to operate without interruptions including where there is a temporary stoppage of the system supplying caps.

The document EP 0993417 describes a device providing a mobile store of caps for feeding caps to an automatic capping machine; the device known from that document comprises a cylinder rotating around a vertical axis and having around its periphery a plurality of parallel cavities disposed so as to cause the caps to advance along a helicoidal pathway extending around the cylinder.

The object of the present invention is to provide a device for feeding caps that enables a mobile buffer stock of caps to be formed upstream from the capping machine, which has a simpler and a more economic structure than the devices of known type.

According to the present invention, this purpose is achieved by a device having the characteristics that form the subject of the attached claims.

An embodiment of the present invention will now be described in detail with reference to the attached drawings, provided as a simple example without limiting intent, in which:
- figure 1 is a side view in diagram form of a device for feeding caps according to the present invention,
- figure 2 is a plan view in the direction indicated by arrow II in figure 1,
- figure 3 is a section along the line III of figure 2, and
- figure 4 is an enlarged detail of the part indicated by arrow IV in figure 3.

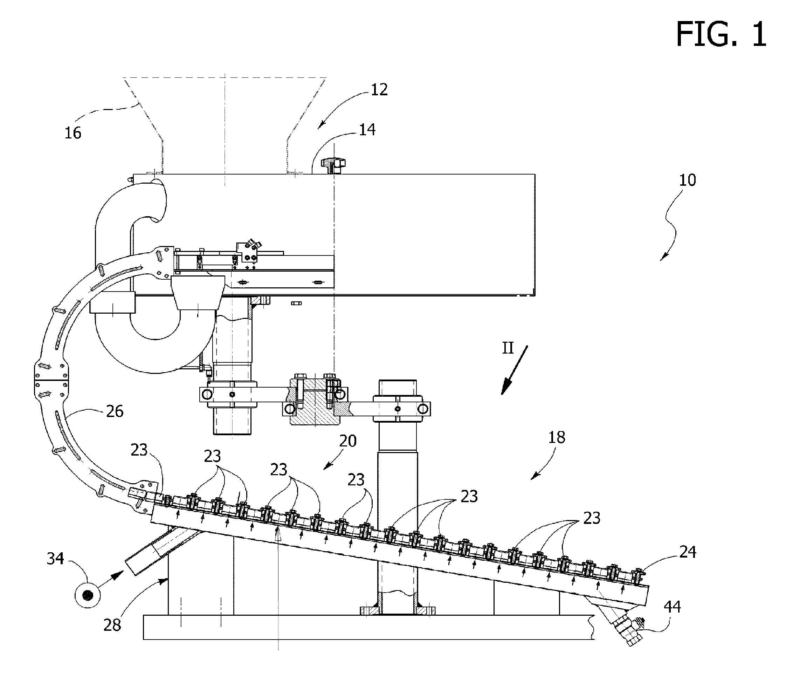

With reference to figure 1, a device for feeding caps to a capping machine is indicated as 10. The device illustrated in figure 1 is used to feed plastic caps to a combined bottle blowing and filling-capping plant.

The device 10 comprises a cap feeding unit 12 including a container 14 with an entrance hopper 16. The plastic caps are produced by an injection moulding machine of conventional type (not shown). On leaving the injection moulding machine, the caps are discharged into the hopper 16 through which they reach the container 14 of the feeding unit 12. The feeding device 10 comprises a cap transport structure 18 that defines a route of transport between the feeding unit 12 and an automatic capping machine (not shown).

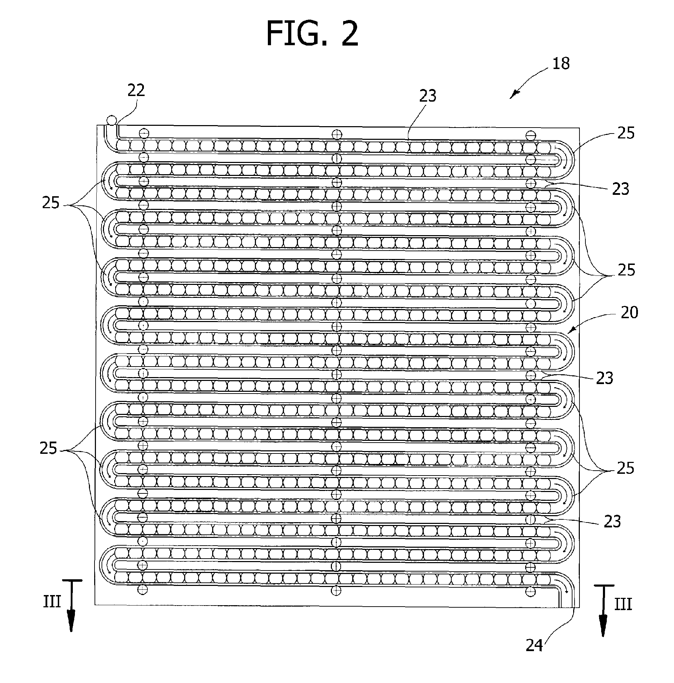

With reference to figure 2, the transport structure 18 comprises a cap advancement guide 20 having an entrance section 22 and an exit section 24. The advancement guide 20 has a serpentine configuration, with a plurality of parallel rectilinear branches 23 linked in series one to another by means of arched pieces 25.

With reference to figure 1, the entrance section 22 of the transport structure 18 is linked to the feeding unit 12 through a channel 26 that typically is arched, but that may also be rectilinear, depending on the position of the feeding device. The container 14 of the collection unit 12 is preferably fitted with a centrifugal device for feeding the caps in an ordered and sequential fashion to the channel 26. The caps move along the channel 26 under the action of gravity and/or by effect of movement imparted to them by the centrifugal device of the feeding unit 12.

The feeding unit 12, typically of the centrifugal type, may also be of the vibration or alveolar type.

Preferably, the transport structure 18 rests on an inclined base 28, such that the serpentine advancement guide 20 is contained in a plane inclined along the direction of advancement from the entrance section 22 towards the exit section 24 from a higher to a lower level.

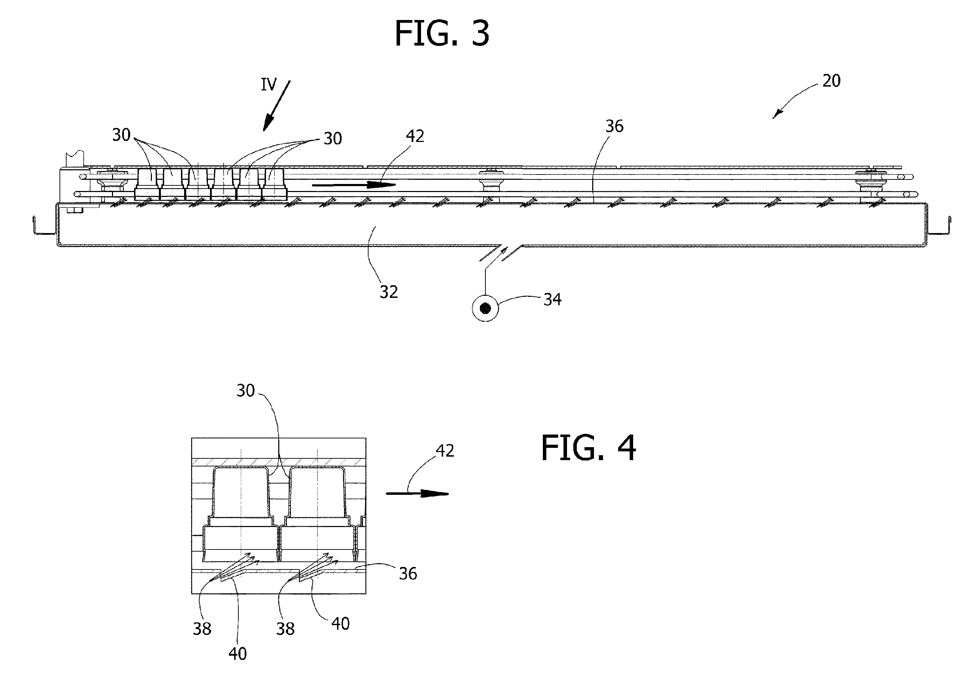

With reference to figures 3 and 4, the advancement guide 20 comprises a section elongated in the longitudinal direction, along which the caps 30 advance in a continuous fashion, guided by lateral containing surfaces and, if necessary, by superior and/or inferior surfaces.

According to the present invention, advancement of the caps 30 along the guide 20 is achieved through a plurality of air jets that cause the caps 30 to advance jointly in contact one with the next along the transport route, as successive caps leave the exit section 24.

Figures 3 and 4 illustrate a possible construction example of the air jet system to produce advancement of the caps along the transport route. In this embodiment, a distribution chamber 32 for air under pressure is situated below the advancement guide 20, the chamber extending along the entire length of the advancement guide 20. The chamber 32 is connected to a supply source of air under pressure indicated in diagram form as 34. The chamber 32 is delimited upwards by a wall 36 comprising the rear wall of the advancement guide 20. The wall 36 is fitted with a plurality of holes 38 through which the air under pressure contained in the chamber 32 exits. The holes 38 are oriented such that the air jets from these holes produce advancement of the caps 30 along the guide 20. Preferably, as illustrated in figure 4, the holes 38 are formed by portions that are cut and inclined downwards by a punching operation performed on the wall 36. The inclined portions 40 of the wall 36 are disposed such that the air jets from the holes 38 are oriented towards the direction of advancement of the caps 30, indicated by the arrow 42 in figures 3 and 4.

In operation, the caps 30 are disposed in contact one with the next along the advancement guide 20 and fill the advancement guide starting from the exit section 24, backing up the transport route until they reach a certain section (generally it is completely full). The number of caps contained in the transport route constitutes a mobile buffer stock for the capping machine, that guarantees operation of the combined plastic bottle blowing and filling-capping plant including in the case of a temporary halt in the cap supply system. As the caps leave the exit section 24 to be used by the capping machine, the air jets cause the joint advancement of the caps along the transport route.

The inclined arrangement of the transport route facilitates washing the cap transport device. The air distribution chamber 32 may also be fitted with an entrance and an outlet for a flow of washing water. In figure 1, a tap for discharging the washing water is indicated by 44.

It is possible to replace some series of air jets with the same number of water jets, if desired together with disinfecting liquids, so as to form one or more cap washing and/or drying stations.

This device may also be used to perform the operations described above independently of its buffer function.

Naturally, remaining the same the principle of the invention, the construction details and embodiments may be widely varied with regard to what is described and illustrated here, without thereby departing from the scope of the invention, as defined by the attached claims.

## Claims

**1.** Device for feeding caps to a capping machine, comprising a cap transport route (18) along which the caps (30) advance in a continuous fashion between an entrance section (22) and an exit section (24), in which the transport route (18) contains a mobile buffer stock of caps advancing jointly as the caps leave said exit section (24), **characterised in that** the transport route (18) is provided with a plurality of holes (38) to supply air jets capable of causing said caps (30) to advance jointly along the transport route (18).

**2.** Feeding device according to claim 1, **characterised in that** the transport route (18) comprises an advancement guide (20) extending along a serpentine route including a plurality of straight sections (23) linked in series one to the next through a plurality of arched sections (24).

**3.** Feeding device according to claim 2, **characterised in that** the advancement guide (20) is contained on a plane inclined along the direction of advancement of the caps from a higher to a lower level.

**3.** Feeding device according to claim 2 or claim 3, **characterised in that** it includes a chamber (32) for distributing air under pressure, the chamber (32) being provided with a plurality of holes (38) through which air jets exit in such a fashion as to cause the caps (30) to advance along the advancement guide (20).

**5.** Feeding device according to claim 4, **characterised in that** the distribution chamber (32) extends along the route of the advancement guide (20).

**6.** Feeding device according to claim 5, **characterised in that** the distribution chamber (32) has an upper wall (36) provided with said holes (38), said upper wall (36) forming a bottom wall of the advancement guide (20).

**7.** Feeding device according to any of the previous claims, **characterised in that** the transport route includes an entrance and an exit for a flow of washing water.

**8.** Device for washing and/or drying caps for containers, **characterised in that** it includes a cap transport route (18) along which the caps (30) advance in a continuous fashion between an entrance section (22) and an exit section (24), in which the transport route (18) contains a mobile buffer stock of caps advancing jointly as the caps leave said exit section (24).
